# FASCICULE DE BREVET EUROPEEN

(11) **EP 1 366 317 B1**
(45) Date de publication et mention de la délivrance du brevet: **02.05.2007**
(21) Numéro de dépôt: 02713016.0
(22) Date de dépôt: 06.03.2002
(51) Int. Cl.: F16K 31/04

(54) **DISPOSITIF DE COMMANDE**
STEUERVORRICHTUNG
CONTROL DEVICE

(30) Priorité: 06.03.2001 FR 0103130
(43) Date de publication de la demande: 03.12.2003
(73) Titulaire: G. Cartier Technologies, 74302 Cluses (FR)
(72) Inventeur: SOLLIER, Ghislain, F-74250 Ville en Sallaz (FR)
(74) Mandataire: Poncet, Jean-François
(86) Numéro de dépôt international: PCT/FR2002/000796
(87) Numéro de publication internationale: WO 2002/070936

(56) Documents cités:
- EP-A- 1 106 923
- DE-A- 2 022 863
- DE-A- 2 643 550
- DE-A- 6 922 573
- DE-B- 1 806 094
- DE-U- 8 225 214
- DE-U- 29 911 769
- US-A- 3 273 095
- US-A- 3 808 895
- US-A- 5 199 456

## Description

### DOMAINE TECHNIQUE DE L'INVENTION

La présente invention concerne les vannes électromagnétiques permettant la commande d'un débit de fluide dans un chemin de circulation de fluide.

De telles vannes sont utilisées notamment pour le réglage du débit gazeux alimentant un brûleur ou une chaudière à gaz.

On connaît déjà des électrovannes permettant le réglage continu du débit gazeux, par un clapet à déplacement axial coopérant avec un siège pour déterminer dans le passage de gaz une section de passage de gaz réglable entre une position d'ouverture totale et une position d'ouverture minimale. Généralement, les électrovannes permettant le réglage continu de débit de gaz n'assurent pas un réglage jusqu'à l'obturation totale, et l'on doit leur associer une vanne d'obturation.

Pour le réglage du débit gazeux, on connaît également une technologie à plusieurs vannes raccordées en parallèles, et permettant chacune le passage d'une partie du débit gazeux maximal. Dans ce cas, chacune des électrovannes peut assurer l'obturation totale de son propre passage, la fermeture de l'ensemble des vannes assurant l'obturation totale du passage gazeux. L'inconvénient est un réglage discontinu du débit gazeux, chaque électrovanne constituant un pallier de réglage.

Dans tous les cas, les normes actuellement en vigueur pour la commande des flux gazeux obligent à prévoir deux systèmes de sécurité en série l'un derrière l'autre, pour assurer la sécurité d'obturation en cas de défaut d'alimentation électrique de l'électrovanne.

Dans la technologie à plusieurs vannes raccordées en parallèle, il faut donc ajouter une électrovanne de sécurité en série avec l'ensemble des électrovannes parallèles.

Dans la technologie à électrovanne à réglage continu, dans laquelle l'électrovanne à réglage continu est associée à une électrovanne d'obturation totale, il faut également ajouter une électrovanne de sécurité pour assurer la double obturation en cas de défaut d'alimentation électrique.

On comprend que les systèmes mentionnés ci-dessus conduisent à une grande complexité du dispositif, nécessitant l'usage simultané de plusieurs électrovannes et de leurs circuits de commande.

On connaît également, du document DE 18 06 094 B, une vanne électromagnétique à double sécurité, fonctionnant en tout ou rien. Dans ce document, le clapet est monté à l'extrémité d'un corps tubulaire dans lequel coulisse une tige d'actionnement elle-même solidaire d'un noyau magnétique d'entraînement. Le noyau magnétique d'entraînement est sollicité par une bobine d'entraînement qui génère un champ magnétique provoquant le déplacement axial du noyau magnétique d'entraînement. Un second noyau magnétique de sécurité est déplaçable axialement par rapport au premier noyau magnétique d'entraînement, duquel il est séparé par un anneau non magnétique.. Le second noyau magnétique de sécurité est sollicité par un ressort en direction du clapet, et est sollicité magnétiquement par une seconde bobine de sécurité qui génère un champ magnétique provoquant le déplacement axial du second noyau de sécurité. Le clapet est repoussé par un ressort vers le siège de la vanne. Un tel dispositif ne permet pas de régler de façon continue la position du clapet face au siège : la vanne fonctionne en tout ou rien, le clapet pouvant prendre seulement une position de pleine ouverture et une position de fermeture, selon l'état d'alimentation des bobines. Egalement, le noyau magnétique d'entraînement n'est pas solidaire du clapet, mais est relié au clapet par une tige coulissant dans un corps cylindrique lui-même solidaire du clapet. Egalement, pour réaliser l'ouverture de la vanne, il est nécessaire de générer un champ magnétique intense pour provoquer le collage des noyaux magnétiques les uns sur les autres, ce qui nécessite des bobines puissantes et volumineuses.

On connaît également, de chacun des documents DE 20 22 863 A, DE 82 25 214 U ou DE 26 43 550 A, un dispositif de commande et de sécurité de débit de fluide selon le préambule de la revendication 1.

Dans chacun de ces documents, un électroaimant est embarqué sur une tige d'actionnement.

Dans le document EP 1 106 923 A2, publié après la date de priorité dont bénéficie la présente demande de brevet, un électroaimant est également embarqué sur la tige d'actionnement, et est donc mobile.

### EXPOSE DE L'INVENTION

Le problème mis en évidence par la présente invention est d'assurer à la fois un réglage continu du débit de fluide dans un chemin de circulation de fluide, et une bonne sécurité d'obturation en cas de défaut d'alimentation électrique des électrovannes, tout en remplissant ces fonctions à l'aide d'un nombre réduit d'électrovannes et de circuits de commande pour simplifier le dispositif et réduire son coût.

Un autre problème que l'invention se propose de résoudre par certains modes de réalisation est d'assurer la commande de l'électrovanne de réglage au moyen d'un moteur, pour un réglage continu et une bonne précision de réglage, tout en assurant le rappel automatique du moteur en position d'obturation de l'électrovanne sans risque d'écrasement ou d'amplification du phénomène de collage des joints d'étanchéité et sans risque de patinage ou de blocage du moteur.

Pour atteindre ces objets ainsi que d'autres, l'invention prévoit un dispositif de commande et de sécurité d'un débit de fluide qui parcourt un chemin de circulation de fluide traversant un corps principal de dispositif, comprenant :
- un clapet à déplacement axial coopérant avec un siège pour déterminer, dans le passage de fluide, une section de passage de fluide réglable entre une position d'ouverture totale et une position d'obturation,
- un actionneur linéaire relié mécaniquement au clapet directement par une tige de liaison en déplacement axial, pour déplacer axialement de façon continue le clapet face au siège entre ses positions d'ouverture totale et d'obturation, permettant un réglage continu de la position du clapet face au siège,
- la tige de liaison comprenant un premier tronçon et un second tronçon coaxiaux indépendants, le premier tronçon étant solidaire du clapet, le second tronçon étant entraîné par l'actionneur linéaire, et les deux tronçons pouvant se déplacer axialement l'un par rapport à l'autre entre une position de rapprochement relatif et une position d'éloignement relatif,
- un ressort de rappel sollicitant le clapet et le premier tronçon de tige de liaison à l'écart du second tronçon de tige de liaison pour rappeler le clapet en position d'obturation ;
selon l'invention :
- chacun des premier et second tronçons de tige de liaison comprend au moins une portion de liaison respective en matériau ferromagnétique, les deux portions de liaison étant en regard l'une de l'autre selon deux surfaces de contact respectives, avec un entrefer lorsqu'elles sont en position d'éloignement relatif,
- un circuit magnétique de couplage à bobine d'excitation est couplé magnétiquement aux portions de liaison des tronçons de tige de liaison et est conformé pour générer sélectivement un champ magnétique circulant entre les deux portions de liaison des tronçons de tige de liaison, ledit champ magnétique assurant une attraction magnétique mutuelle des tronçons de tige de liaison l'un vers l'autre à l'encontre de la force de rappel exercée par le ressort de rappel, ladite attraction magnétique étant supérieure à la force de rappel du ressort de rappel lorsque les deux tronçons sont en position de rapprochement relatif,
- le circuit magnétique de couplage et la bobine d'excitation sont des éléments propres du corps principal de dispositif.

De la sorte, l'alimentation de la bobine d'excitation maintient le collage des tronçons de tige de liaison l'un à l'autre, assurant le couplage mécanique du clapet à l'actionneur linéaire pour ses déplacements fonctionnels, et l'interruption d'alimentation de la bobine d'excitation provoque la libération relative des tronçons de tige de liaison l'un par rapport à l'autre, assurant le découplage du clapet qui est alors rappelé en position d'obturation par le ressort de rappel quel que soit l'état de l'actionneur linéaire.

Dans la description et les revendications, l'expression "actionneur linéaire" désigne tout élément permettant de déplacer axialement le clapet de façon continue pour l'amener et le maintenir en toute position entre les positions limites de pleine ouverture et de fermeture, et un tel élément garde sa position fixe lors d'une interruption d'alimentation électrique. Un exemple de tel actionneur linéaire est un moteur rotatif associé à un vérin à vis.

Selon une possibilité, les portions de liaison des tronçons de tige de liaison comportent des surfaces de contact respectives planes.

En alternative, les portions de liaison des tronçons de tige de liaison comportent des surfaces de contact respectives tronconiques correspondantes.

De préférence, l'actionneur linéaire comprend un moteur, par exemple un moteur pas à pas.

Selon un mode de réalisation avantageux, le dispositif comprend :
- un capteur sensible au courant électrique parcourant la bobine d'excitation et générant un signal électrique de couplage lors de la fermeture du circuit magnétique de couplage par rapprochement et collage des tronçons de tige de liaison l'un à l'autre,
- un circuit de commande de l'actionneur linéaire, recevant le signal électrique de couplage, et adapté pour interrompre l'alimentation de l'actionneur linéaire dans le sens de sa fermeture à réception dudit signal électrique de couplage.

De cette façon, quelle que soit la position de l'actionneur linéaire à l'instant d'une interruption de l'alimentation électrique, l'actionneur linéaire revient ensuite en une position de fermeture parfaitement définie sans provoquer de serrage excessif du clapet sur le siège. La position de fermeture de l'actionneur linéaire est définie de façon précise et reproductible. On évite tout risque de blocage du moteur de l'actionneur linéaire, blocage qui se produirait lors d'une compression trop importante du clapet sur le siège.

Dans une première réalisation simplifiée, l'ensemble constitue une vanne de commande proportionnelle à fermeture de sécurité en cas d'absence d'alimentation en courant électrique.

Dans ce cas, le dispositif de l'invention doit, pour respecter les normes de sécurité, être associé à une vanne de sécurité à clapet de sécurité porté par un noyau magnétique mobile sollicité par un ressort de rappel en position d'obturation et sollicité par un champ magnétique d'ouverture de vanne généré par un circuit magnétique de vanne de sécurité et une bobine d'actionnement, la vanne de sécurité étant raccordée en série dans le chemin de circulation de fluide, la bobine d'actionnement de vanne de sécurité étant alimentée électriquement en simultanéité de la bobine d'excitation de la vanne de commande à fermeture de sécurité.

Selon une seconde réalisation, le dispositif de l'invention comprend en outre une vanne de sécurité à clapet de sécurité porté par un noyau magnétique mobile sollicité par un ressort de rappel en position d'obturation et sollicité par un champ magnétique d'ouverture de vanne généré par un circuit magnétique de vanne de sécurité et une bobine d'actionnement, la vanne de sécurité étant raccordée en série dans le chemin de circulation de fluide, le circuit magnétique de vanne de sécurité étant conformé pour constituer simultanément le circuit magnétique de couplage de la vanne de commande à fermeture de sécurité, et la bobine d'actionnement remplissant simultanément la fonction de bobine d'excitation de la vanne de commande à fermeture de sécurité.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue schématique en coupe d'un dispositif de commande et de sécurité de débit de fluide selon un premier mode de réalisation de la présente invention, en position d'obturation ;
- la figure 2 est une vue schématique en coupe du dispositif de la figure 1, en position de régulation ;
- la figure 3 est une vue schématique en coupe du dispositif de la figure 1, en position d'obturation en cas de coupure de l'alimentation électrique ;
- la figure 4 est une vue schématique en coupe d'un dispositif de commande et de sécurité de débit de fluide selon un second mode de réalisation de la présente invention, en position d'obturation totale
- la figure 5 est une vue en coupe du dispositif de la figure 4, en position d'ouverture de l'électrovanne de sécurité, l'électrovanne de réglage restant fermée ;
- la figure 6 est une vue schématique en coupe du dispositif de la figure 4, en position de régulation de débit ; et
- la figure 7 est une vue schématique en coupe du dispositif de la figure 4, en position de double obturation de sécurité en cas de coupure d'alimentation électrique.

### DESCRIPTION DES MODES DE REALISATION PREFERES

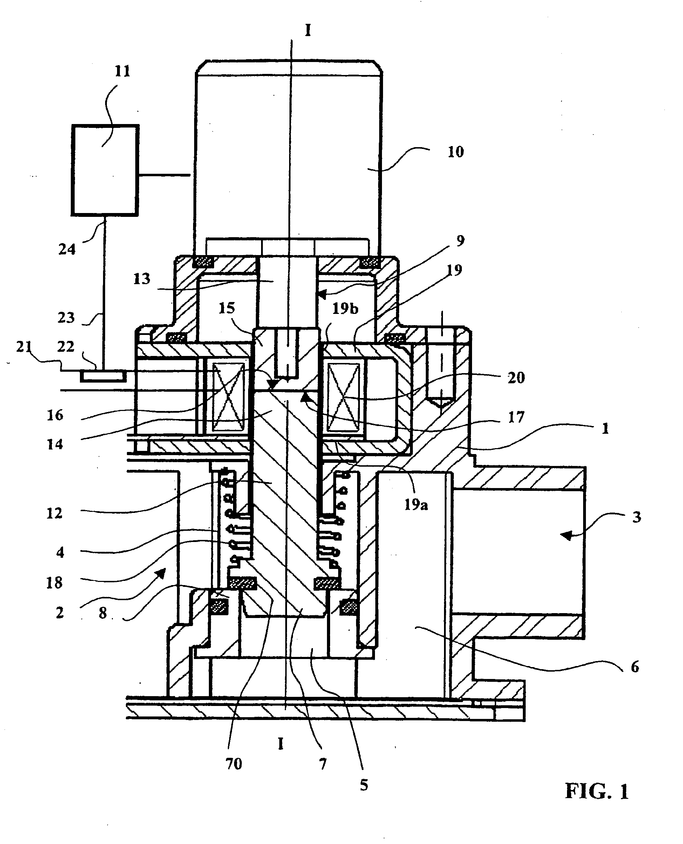

Dans le mode de réalisation illustré sur les figures 1 à 3, le dispositif de commande et de sécurité d'un débit de fluide assure d'une part la fonction de réglage continu du débit de fluide, et d'autre part la fonction d'obturation automatique en cas d'absence d'alimentation électrique du dispositif.

Le dispositif comprend un corps principal 1 dans lequel est prévu un chemin de circulation de fluide entre une entrée 2 et une sortie 3. Dans la réalisation illustrée sur la figure 1, le chemin de fluide parcourt l'entrée 2, puis une chambre amont 4, une chambre aval 5, une chambre de sortie 6, et enfin la sortie 3.

Entre la chambre amont 4 et la chambre aval 5, un clapet 7 se déplace axialement selon l'axe I-I et coopère avec un siège 8 pour déterminer, dans le passage de fluide, une section de passage de fluide réglable entre une position d'ouverture totale et une position d'obturation. La position d'obturation est illustrée sur la figure 1.

Le clapet 7 est directement relié mécaniquement par une tige de liaison 9 à un actionneur linéaire 10. L'actionneur linéaire 10 est agencé pour déplacer axialement la tige de liaison 9 et le clapet 7 entre les positions d'ouverture totale et d'obturation, et pour les maintenir en toute position de réglage choisie entre les positions extrêmes. L'actionneur linéaire 10 peut par exemple comprendre un moteur électrique, alimenté par un circuit de commande 11.

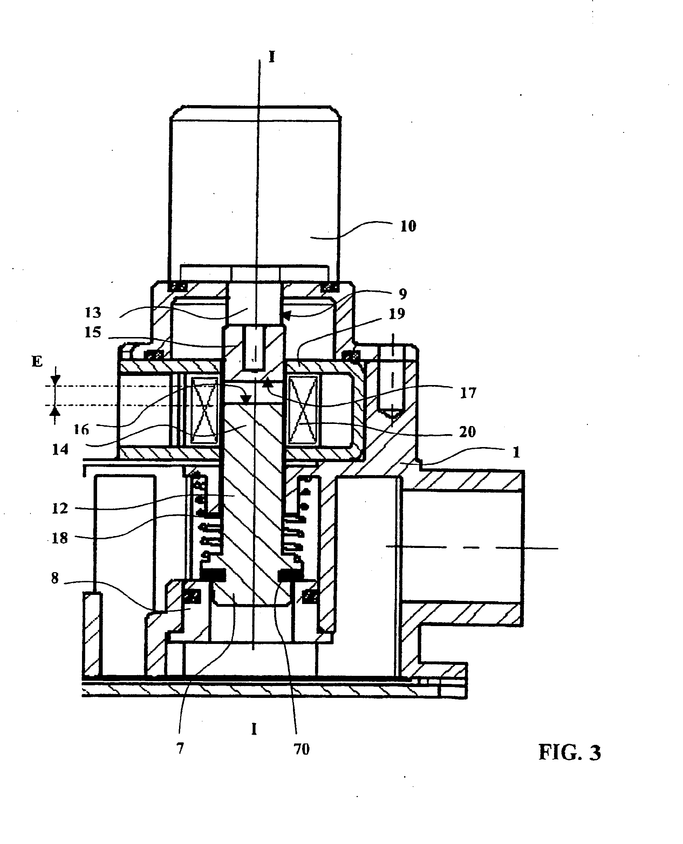

La tige de liaison 9 est en deux parties disjointes, comprenant un premier tronçon 12 et un second tronçon 13 coaxiaux indépendants. Le premier tronçon 12 est solidaire du clapet 7. Le second tronçon 13 est entraîné par l'actionneur linéaire 10. Par coulissement dans le corps principal 1 selon l'axe I-I, les deux tronçons 12 et 13 peuvent se déplacer axialement l'un par rapport à l'autre entre une position de rapprochement relatif (figure 1) et une position d'éloignement relatif (figure 3).

Le premier tronçon 12 de tige de liaison 9 comprend au moins une portion de liaison 14 en matériau ferromagnétique. De même, le second tronçon 13 de tige de liaison 9 comprend une portion de liaison 15 en matériau ferromagnétique. Les deux portions de liaison 14 et 15 sont en regard l'une de l'autre selon deux surfaces de contact 16 et 17 respectives.

Un ressort de rappel 18 sollicite le clapet 7 et le premier tronçon 12 de tige de liaison 9 en direction du siège 8, c'est-à-dire à l'écart du second tronçon 13 de tige de liaison 9, jusqu'à obturation de l'électrovanne.

Un circuit magnétique de couplage 19 à bobine d'excitation 20 est couplé magnétiquement aux portions de liaison 14 et 15 des tronçons 12 et 13 de tige de liaison 9. Le circuit magnétique de couplage 19 est conformé pour générer sélectivement un champ magnétique circulant entre les deux portions de liaison 14 et 15 des tronçons 12 et 13. Sur la figure 1, on voit que la bobine d'excitation 20 est une bobine annulaire qui entoure les portions de liaison 14 et 15 en matériau ferromagnétique de la tige de liaison 9. Le circuit magnétique de couplage 19, en forme de C, referme les lignes de champ à l'extérieur de la bobine d'excitation 20 entre les deux portions de liaison 14 et 15, en laissant seulement un faible entrefer entre le pôle distal 19a et le pôle proximal 19b du circuit magnétique de couplage 19 d'une part et les portions de liaison 14 et 15 respectives de la tige de liaison 9 d'autre part. Un troisième entrefer E se trouve à l'interface entre les surfaces de contact 16 et 17 respectives des portions de liaison 14 et 15 de tiges de liaison 9, comme on le voit mieux sur la figure 3 en position d'éloignement relatif.

La bobine d'excitation 20 est alimentée en courant électrique par des conducteurs d'entrée 21. En présence d'un courant électrique, la bobine d'excitation 20 crée un champ magnétique qui, parcourant le circuit magnétique de couplage 19 et les portions de liaison 14 et 15, assure une attraction magnétique mutuelle des tronçons 12 et 13 de tige de liaison 9 l'un vers l'autre à l'encontre de la force de rappel exercée par le ressort de rappel 18. La bobine d'excitation 20 et son courant d'excitation sont choisis de façon que l'attraction magnétique qui s'exerce entre les deux tronçons 12 et 13 de tige de liaison 9 en position de rapprochement relatif soit supérieure à la force de rappel du ressort de rappel 18.

De la sorte, l'alimentation de la bobine d'excitation 20 en énergie électrique maintient le collage des tronçons 12 et 13 de tige de liaison 9 l'un à l'autre, assurant le couplage mécanique permanent du clapet 7 à l'actionneur linéaire 10 lors des déplacements longitudinaux pour le réglage du débit de fluide.

On comprend que, lorsque les tronçons 12 et 13 sont en position d'éloignement relatif à entrefer E, le flux magnétique généré par la bobine d'excitation 20 diminue à cause de la présence de l'entrefer, et si l'on voulait que l'alimentation de la bobine d'excitation 20 assure une attraction magnétique mutuelle des tronçons 12 et 13 supérieure à la force de rappel exercée par le ressort de rappel 18, il faudrait alors utiliser une bobine d'excitation 20 de forte puissance. Le volume du dispositif serait alors fortement augmenté, et le coût de réalisation serait plus élevé, ainsi que la consommation en énergie pour alimenter la bobine.

Selon l'invention, on pourra préférer utiliser une bobine de plus faible puissance, juste suffisante pour maintenir le collage des tronçons 12 et 13 l'un sur l'autre lorsqu'ils sont en position rapprochée, l'attraction magnétique devenant insuffisante pour rapprocher les tronçons 12 et 13 l'un de l'autre lorsqu'ils sont en présence d'un entrefer E. Grâce à la présence de l'actionneur linéaire, qui peut déplacer les tronçons 12 et 13 l'un par rapport à l'autre, pour les amener au contact l'un de l'autre après rétablissement de l'alimentation électrique, le dispositif peut alors être mis à nouveau en état de liaison mécanique continue entre l'actionneur linéaire et le clapet par alimentation de la bobine d'excitation 20.

Le fonctionnement du dispositif est encore expliqué en relation avec les figures 1 à 3.

Sur la figure 1, le dispositif est en position d'obturation permanente : le clapet 7 est en appui sur le siège 8, pour l'obturation totale du chemin de circulation de fluide entre la chambre amont 4 et la chambre aval 5. Le clapet 7 est maintenu dans cette position par le premier tronçon 12 de tige de liaison 9 qui est lui-même poussé par le ressort 18 et par le second tronçon 13 lui-même sollicité par l'actionneur linéaire 10. Le dispositif garde cet état quelle que soit l'alimentation de la bobine d'excitation 20.

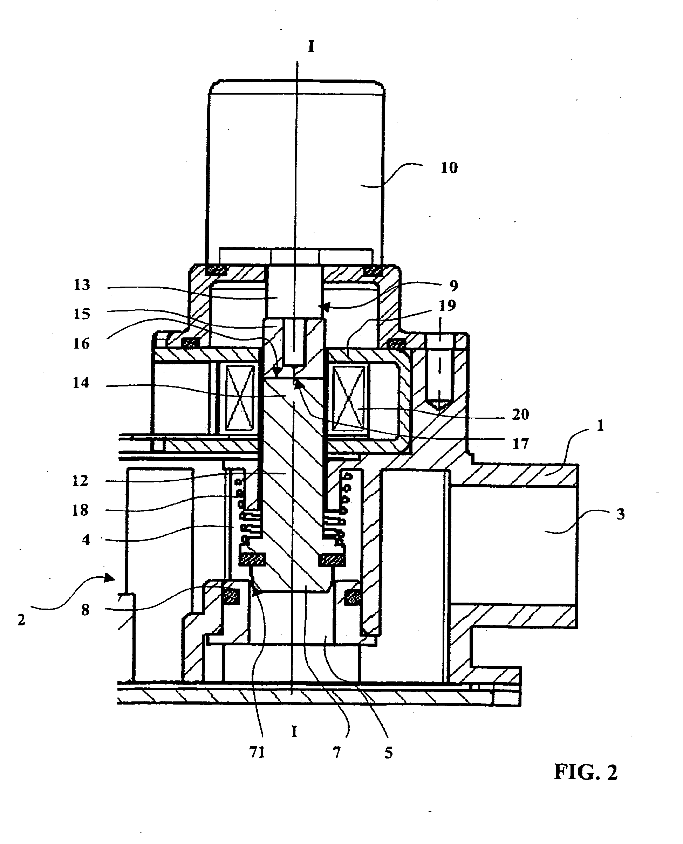

La figure 2 illustre l'état du dispositif en fonctionnement normal de régulation du débit de fluide : la bobine d'excitation 20 est alimentée en courant électrique, et provoque le collage permanent des tronçons 12 et 13 de tige de liaison 9 l'un à l'autre. Dans ce cas, l'actionneur linéaire 10 peut déplacer axialement selon l'axe longitudinal I-I la tige de liaison 9 et le clapet 7 par rapport au siège 8, pour régler de façon continue la section de passage de fluide 71 qui détermine le débit de fluide dans le chemin de circulation de fluide. Le clapet 7 reste couplé à l'actionneur linéaire 10 tant que l'on maintient l'alimentation électrique de la bobine d'excitation 20.

Si l'on interrompt l'alimentation électrique de la bobine d'excitation 20, le dispositif prend l'état illustré sur la figure 3 : par suite de la disparition d'alimentation électrique de la bobine d'excitation 20, le champ magnétique parcourant le circuit magnétique de couplage 19 disparaît, de sorte que l'attraction magnétique disparaît entre les tronçons 12 et 13 de tige de liaison 9. Le second tronçon 13 reste fixe, sa position étant déterminée par l'actionneur linéaire 10, qui est également fixe par absence d'alimentation électrique. Par contre, le premier tronçon 12 est sollicité par le ressort de rappel 18, et se déplace vers la position d'obturation, de sorte que le clapet 7 vient à nouveau et automatiquement en appui sur le siège 8, assurant l'obturation totale de l'électrovanne.

Dans cette position de la figure 3, le troisième entrefer E de grande épaisseur sépare les deux tronçons 12 et 13, lorsque l'interruption d'alimentation se produit alors que l'actionneur linéaire 10 est en position d'ouverture totale ou partielle. Les tronçons 12 et 13 sont ainsi en position d'éloignement relatif à entrefer E.

Au retour de l'alimentation électrique, à cause du troisième entrefer E, le champ magnétique généré par la bobine d'excitation 20 n'est pas suffisant pour que l'attraction magnétique puisse vaincre la force de rappel du ressort de rappel 18 et provoquer le collage des tronçons 12 et 13 l'un à l'autre. Il faut que l'actionneur linéaire 10 déplace le second tronçon 13 en direction du premier tronçon 12, rapprochant les surfaces de contact 16 et 17 l'une de l'autre jusqu'à réduction suffisante du troisième entrefer E et collage des tronçons 12 et 13 l'un à l'autre. L'électrovanne retrouve alors sa fonction de régulation du débit de fluide.

Sur la figure 1, on a en outre représenté des moyens permettant de commander automatiquement l'arrêt de l'actionneur linéaire 10 lorsqu'il retourne en position d'obturation, après rétablissement de l'alimentation électrique. En effet, à partir de la position d'obturation de sécurité telle qu'illustrée sur la figure 3, dans laquelle l'actionneur maintient le second tronçon 13 de tige de liaison 9 en retrait par rapport au premier tronçon 12 de tige de liaison 9 qui est repoussé en position d'obturation par le ressort de rappel 18, au rétablissement de l'alimentation électrique, il est nécessaire de piloter l'actionneur linéaire 10 pour rapprocher les surfaces de contact 16 et 17 selon un écartement suffisamment faible pour que le champ magnétique provoque à nouveau le collage des tronçons 12 et 13 de tige de liaison 9. Mais il faut simultanément piloter l'arrêt de l'actionneur linéaire 10 dès que ce collage est intervenu, à défaut de quoi l'actionneur linéaire 10 poursuit sa course et comprime la tige de liaison 9 et le clapet 7 contre le siège 8, provoquant l'écrasement des joints d'étanchéité tels que le joint 70. Egalement, si l'on n'arrête pas l'actionneur linéaire 10 lors du collage, l'actionneur linéaire 10 peut patiner, et perdre ses repères de positionnement ce qui nuit à la précision des réglages ultérieurs d'ouverture du clapet 7.

Le mode de réalisation de la figure 1 permet d'interrompre l'alimentation de l'actionneur dès que se produit le couplage entre les deux tronçons 12 et 13 de la tige de liaison 9.

Pour cela, on prévoit un capteur 22, inséré dans les conducteurs d'entrée 21 alimentant la bobine d'excitation 20, sensible au courant électrique parcourant la bobine d'excitation 20, et générant sur sa sortie 23 un signal électrique de couplage lors de la fermeture du circuit magnétique de couplage 19 par rapprochement et collage des tronçons 12 et 13 de tige de liaison 9 l'un à l'autre. La sortie 23 du capteur 22 est connectée à une entrée 24 du circuit de commande 11. Ainsi, le circuit de commande 11 de l'actionneur linéaire 10 reçoit le signal électrique de couplage, et est adapté pour interrompre l'alimentation de l'actionneur linéaire 10 dans le sens de la fermeture du clapet.7 à réception dudit signal électrique de couplage.

Dans le mode de réalisation illustré sur les figures 1 à 3, le circuit magnétique de couplage 19 et la bobine d'excitation 20 sont des éléments propres adaptés sur le corps principal 1 du dispositif, l'ensemble constituant une vanne de commande à fermeture de sécurité en cas d'absence d'alimentation en courant électrique.

Pour satisfaire les normes de sécurité en vigueur, la vanne de commande à fermeture de sécurité telle qu'illustrée sur les figures 1 à 3 peut être associée à une vanne de sécurité, de tout type connu, raccordée en série dans le chemin de circulation de fluide.

Par exemple, on peut associer ladite vanne de commande à fermeture de sécurité à une vanne de sécurité à clapet porté par un noyau magnétique mobile sollicité par un ressort de rappel en position d'obturation et sollicité par un champ magnétique d'ouverture de vanne généré par un circuit magnétique et une bobine d'actionnement. Dans ce cas, la bobine d'actionnement de la vanne de sécurité est alimentée électriquement en simultanéité de la bobine d'excitation 20 du dispositif des figures 1 à 3.

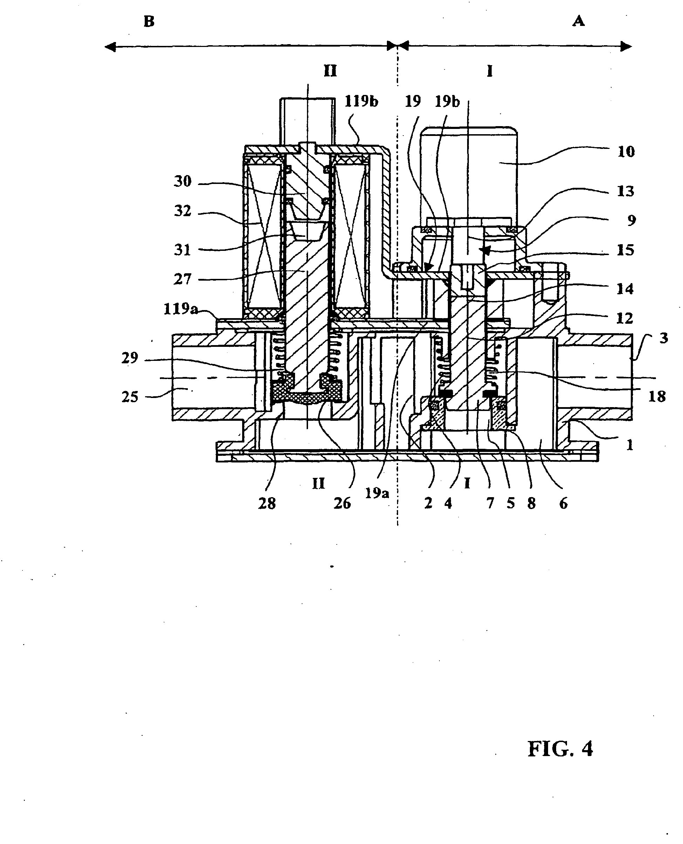

Pour assurer une double sécurité de vanne de commande, on peut toutefois préférer le mode de réalisation des figures 4 à 7.

Dans ce mode de réalisation, on associe une vanne de commande à fermeture de sécurité A, illustrée sur la moitié droite de la figure 4, et une vanne de sécurité B illustrée sur la moitié gauche de la figure 4.

La vanne de commande à fermeture de sécurité A reprend la même structure que celle définie dans le premier mode de réalisation des figures 1 à 3. On retrouve ainsi les mêmes éléments, qui sont repérés par les mêmes références numériques, et notamment : le corps principal 1, l'entrée 2, la sortie 3, la chambre amont 4, la chambre aval 5, la chambre de sortie 6, le clapet 7, le siège 8, la tige de liaison 9, l'actionneur linéaire 10, le premier tronçon 12 de tige de liaison 9, le second tronçon 13 de tige de liaison 9, les portions de liaison 14 et 15 en matériau ferromagnétique, le ressort de rappel 18, le circuit magnétique de couplage 19 avec son pôle distal 19a et son pôle proximal 19b.

Dans ce mode de réalisation des figures 4 à 7, la vanne de commande à fermeture de sécurité A diffère par la structure du circuit magnétique de couplage 19 et de la bobine d'excitation générant le champ magnétique dans le circuit magnétique de couplage 19, comme cela sera expliqué ci-après.

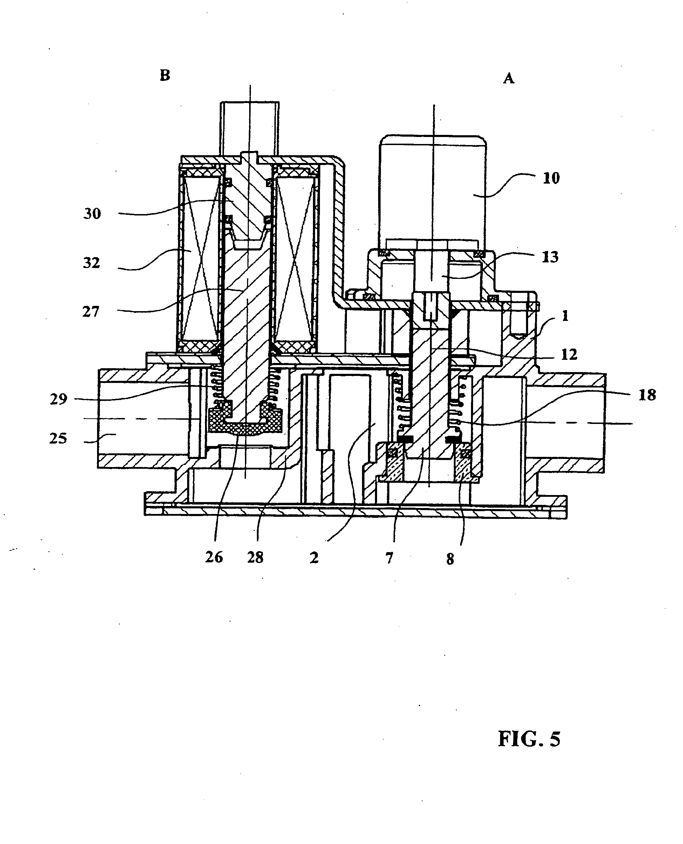

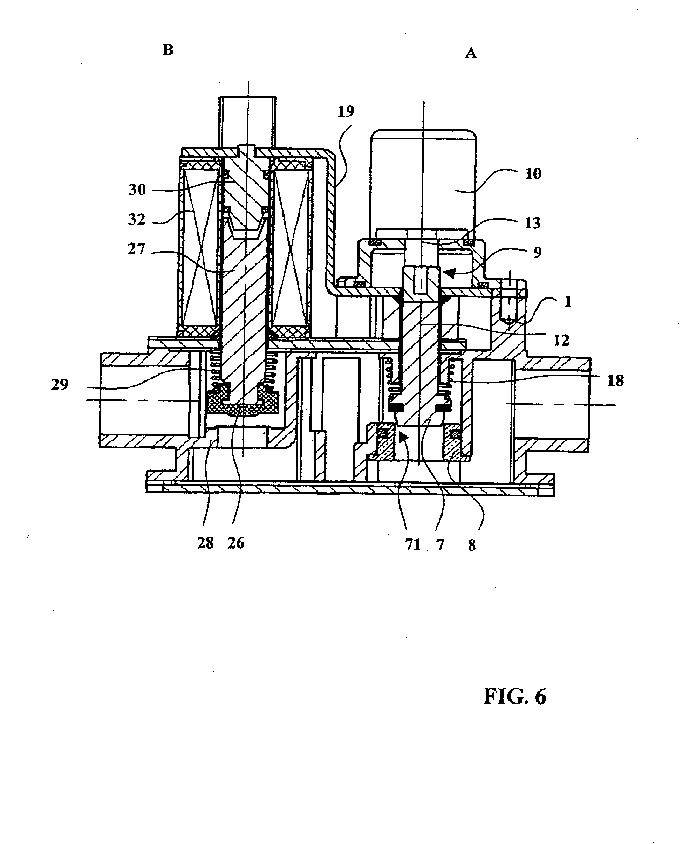

La vanne de sécurité B est réalisée dans le même corps principal 1, et est raccordée en série dans le chemin de circulation de fluide entre une entrée principale 25 et l'entrée 2 de la vanne de commande à fermeture de sécurité A. La vanne de sécurité B comprend un clapet de sécurité 26 porté par un noyau magnétique mobile 27 qui peut coulisser dans le corps principal 1 selon un axe longitudinal II-II pour déplacer le clapet de sécurité 26 entre une position d'obturation, illustrée sur la figure 4, dans laquelle il est en appui sur un siège de sécurité 28 pour s'opposer à tout passage de fluide, et une position d'ouverture illustrée sur les figures 5 et 6 dans laquelle il est en retrait du siège de sécurité 28 pour permettre le passage du fluide depuis l'entrée principale 25 vers l'entrée 2 de la vanne de commande à fermeture de sécurité A.

Le noyau magnétique mobile 27 est sollicité par un ressort de rappel 29, qui le rappelle en position d'obturation.

Le noyau magnétique mobile 27 est associé à un noyau magnétique fixe 30, disposé coaxialement le long de l'axe II-II, et duquel il est séparé par un entrefer 31. Une bobine d'actionnement 32, alimentée par une source d'énergie électrique, est disposée autour des noyaux magnétiques 27 et 30.

Le circuit magnétique de couplage 19 comprend, depuis le pôle distal 19a, une plaque distale 119a dont une portion est à proximité du noyau magnétique mobile 27 pour son couplage magnétique audit noyau magnétique mobile 27. De même, le circuit magnétique de couplage 19 comporte, depuis le pôle proximal 19b, une plaque proximale 119b dont une portion est à proximité du noyau magnétique fixe 30 pour son couplage magnétique. Le champ magnétique généré par la bobine d'actionnement 32 provoque ainsi l'attraction mutuelle du noyau magnétique fixe 30 et du noyau magnétique mobile 27, attraction qui tend à réduire l'entrefer 31 et à coller les deux noyaux 27 et 30 l'un à l'autre pour l'ouverture de la vanne de sécurité B. Simultanément, le champ magnétique généré par la bobine d'actionnement 32 se propage dans le circuit magnétique de couplage 19 jusqu'aux pôles 19a et 19b, puis dans les portions de liaison 14 et 15 de la tige de liaison 9 pour assurer le collage des tronçons 12 et 13 de la tige de liaison 9 qui permet le pilotage de la vanne de commande à fermeture de sécurité A par l'actionneur linéaire 10.

De la sorte, le circuit magnétique de la vanne de sécurité B est conformé pour constituer simultanément le circuit magnétique de couplage 19 de la vanne de commande à fermeture de sécurité A, et la bobine d'actionnement 32 remplit simultanément la fonction de bobine d'excitation de la vanne de commande à fermeture de sécurité A.

Le fonctionnement du dispositif est encore expliqué en relation avec les figures 4 à 7.

Sur la figure 4, le dispositif est en position de fermeture de sécurité : la vanne de commande à fermeture de sécurité A est en position d'obturation totale, le clapet 7 étant en appui contre le siège 8. De même, la vanne de sécurité B est en position d'obturation, la bobine d'actionnement n'étant pas alimentée, de sorte que le clapet de sécurité 26 et le noyau magnétique mobile 27 sont repoussés par le ressort de rappel 29 qui applique le clapet de sécurité 26 contre le siège de sécurité 28.

Sur la figure 5, on alimente la bobine d'actionnement 32, ce qui provoque l'attraction du noyau magnétique mobile 27 par le noyau magnétique fixe 30 et le retrait du clapet de sécurité 26 à l'écart du siège de sécurité 28 pour ouvrir le passage du fluide. Le passage du fluide reste toutefois obturé par la vanne de commande à fermeture de sécurité A, dont l'actionneur linéaire 10 n'a pas été encore ouvert.

Sur la figure 6, le dispositif est dans l'état de régulation : la bobine d'actionnement 32 étant alimentée en courant électrique, elle produit un champ magnétique qui provoque simultanément l'ouverture de la vanne de sécurité B et le collage des tronçons 12 et 13 de la tige de liaison 9, l'actionneur linéaire 10 agissant efficacement pour déplacer à volonté le clapet 7 par rapport au siège 8 pour régler la section de passage de fluide 71.

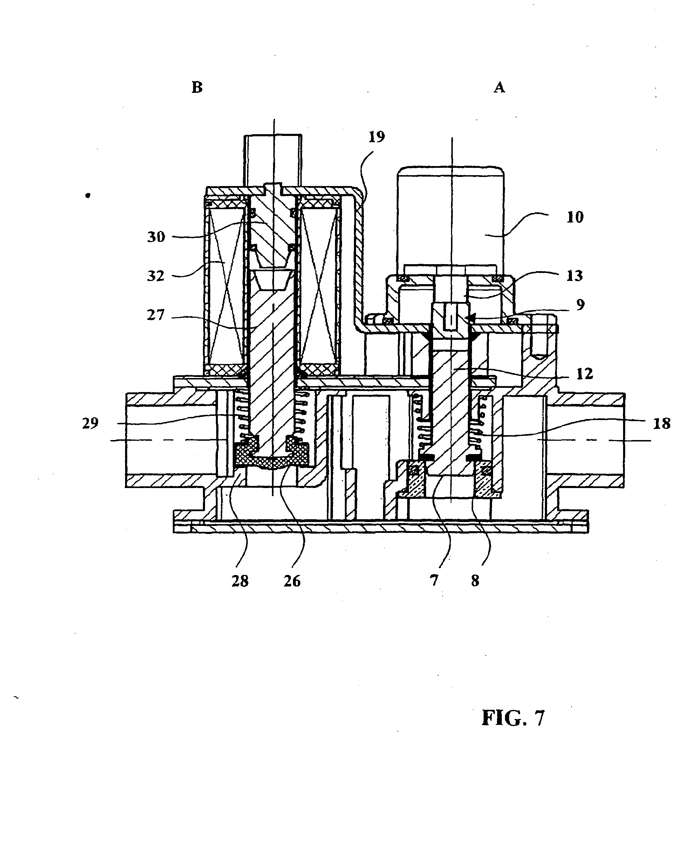

A partir de la position de régulation illustrée sur la figure 6, si l'alimentation de la bobine d'actionnement 32 est interrompue, le dispositif prend alors l'état de fermeture de sécurité illustré sur la figure 7 : à la disparition du champ magnétique parcourant le circuit magnétique de couplage 19, le noyau magnétique mobile 27 et le clapet de sécurité 26 sont repoussés par le ressort de rappel 29 en position de fermeture, pour assurer une première fermeture de sécurité ; simultanément, la disparition du champ magnétique dans le circuit magnétique de couplage 19 provoque la séparation du premier tronçon 12 de tige de liaison 9 par rapport au second tronçon 13, de sorte que le premier tronçon 12 de tige de liaison 9 et le clapet 7 sont repoussés par le ressort de rappel 18 en position d'obturation contre le siège 8, pour assurer automatiquement une seconde fermeture de sécurité.

Au rétablissement de l'alimentation de la bobine d'actionnement 32, la vanne de sécurité B s'ouvre, mais la vanne de commande à fermeture de sécurité A reste fermée jusqu'à ce qu'un opérateur ou un programme approprié provoque le fonctionnement de l'actionneur linéaire 10 dans le sens qui rapproche les tronçons 12 et 13 de tige de liaison 9 pour le collage des deux tronçons, puis dans le sens d'ouverture de la vanne de commande à fermeture de sécurité A.

On comprend que ce second mode de réalisation est particulièrement économique pour réaliser une vanne de commande et de sécurité à double sécurité.

Comme on le voit sur les figures 4 à 7, l'entrefer 31 entre le noyau magnétique mobile 27 et le noyau magnétique fixe 30 est de forme tronconique. Cette forme facilite l'attraction du noyau magnétique mobile 27 sur une course longue. Par contre, comme on le voit mieux sur la figure 3, le troisième entrefer E entre les tronçons 12 et 13 de la tige de liaison 9 est limité par deux surfaces de contact 16 et 17 planes, car la traction entre les deux tronçons 12 et 13 n'a en principe pas à être réalisée sur une grande course. Toutefois, en alternative, on pourra prévoir des surfaces de contact 16 et 17 respectives tronconiques correspondantes, comme pour ce qui concerne l'entrefer 31.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de commande et de sécurité d'un débit de fluide qui parcourt un chemin de circulation de fluide traversant un corps principal (1) de dispositif, comprenant :
- un clapet (7) à déplacement axial coopérant avec un siège (8) pour déterminer, dans le passage de fluide, une section de passage de fluide (71) réglable entre une position d'ouverture totale et une position d'obturation,
- un actionneur linéaire (10) relié mécaniquement au clapet (7) directement par une tige de liaison (9) en déplacement axial, pour déplacer axialement de façon continue le clapet (7) face au siège (8) entre ses positions d'ouverture totale et d'obturation, permettant un réglage continu de la position du clapet (7) face au siège (8),
- la tige de liaison (9) comprenant un premier tronçon (12) et un second tronçon (13) coaxiaux indépendants, le premier tronçon (12) étant solidaire du clapet (7), le second tronçon (13) étant entraîné par l'actionneur linéaire (10), et les deux tronçons (12, 13) pouvant se déplacer axialement l'un par rapport à l'autre entre une position de rapprochement relatif et une position d'éloignement relatif,
- un ressort de rappel (18) sollicitant le clapet (7) et le premier tronçon (12) de tige de liaison (9) à l'écart du second tronçon (13) de tige de liaison (9) pour rappeler le clapet (7) en position d'obturation,
**caractérisé en ce que** :
- chacun des premier (12) et second (13) tronçons de tige de liaison (9) comprend au moins une portion de liaison (14, 15) respective en matériau ferromagnétique, les deux portions de liaison (14, 15) étant en regard l'une de l'autre selon deux surfaces de contact (16, 17) respectives, avec un entrefer (E) lorsqu'elles sont en position d'éloignement relatif,
- un circuit magnétique de couplage (19) à bobine d'excitation (20) est couplé magnétiquement aux portions de liaison (14, 15) des tronçons (12, 13) de tige de liaison (9) et est conformé pour générer sélectivement un champ magnétique circulant entre les deux portions de liaison (14, 15) des tronçons (12, 13) de tige de liaison, ledit champ magnétique assurant une attraction magnétique mutuelle des tronçons (12, 13) de tige de liaison (9) l'un vers l'autre à l'encontre de la force de rappel exercée par le ressort de rappel (18), ladite attraction magnétique étant supérieure à la force de rappel du ressort de rappel (18) lorsque les deux tronçons (12, 13) sont en position de rapprochement relatif,
- le circuit magnétique de couplage (19) et la bobine d'excitation (20) sont des éléments propres du corps principal (1) de dispositif,
de sorte que l'alimentation de la bobine d'excitation (20) maintient le collage des tronçons (12, 13) de tige de liaison (9) l'un à l'autre, assurant le couplage mécanique du clapet (7) à l'actionneur linéaire (10) pour ses déplacements fonctionnels, et l'interruption d'alimentation de la bobine d'excitation (20) provoque la libération relative des tronçons (12, 13) de tige de liaison (9) l'un par rapport à l'autre, assurant le découplage du clapet (7) qui est alors rappelé en position d'obturation par le ressort de rappel (18) quel que soit l'état de l'actionneur linéaire (10).

2. - Dispositif selon la revendication 1, **caractérisé en ce que** le circuit magnétique de couplage (19) comprend un pôle distal (19a) et un pôle proximal (19b), avec seulement un faible entrefer entre le pôle distal (19a) et le pôle proximal (19b) d'une part et les portions de liaison (14 et 15) respectives de la tige de liaison (9) d'autre part..

3. - Dispositif selon l'une des revendications 1 ou 2, **caractérisé en ce que** les portions de liaison (14, 15) des tronçons (12, 13) de tige de liaison (9) comportent des surfaces de contact (16, 17) respectives planes.

4. - Dispositif selon l'une des revendications 1 ou 2, **caractérisé en ce que** les portions de liaison (14, 15) des tronçons (12, 13) de tige de liaison (9) comportent des surfaces de contact (16, 17) respectives tronconiques correspondantes.

5. - Dispositif selon l'une quelconque des revendications 1 à 4, **caractérisé en ce que** l'actionneur linéaire (10) comprend un moteur.

6. - Dispositif selon l'une quelconque des revendications 1 à 5, **caractérisé en ce qu'**il comprend :
- un capteur (22) sensible au courant électrique parcourant la bobine d'excitation (20) et générant un signal électrique de couplage lors de la fermeture du circuit magnétique de couplage (19) par rapprochement et collage des tronçons (12, 13) de tige de liaison (9) l'un à l'autre,
- un circuit de commande (11) de l'actionneur linéaire (10), recevant le signal électrique de couplage, et adapté pour interrompre l'alimentation de l'actionneur linéaire (10) dans le sens de sa fermeture à réception dudit signal électrique de couplage.

7. - Dispositif selon l'une quelconque des revendications 1 à 6, **caractérisé en ce que** l'ensemble constitue une vanne de commande à fermeture de sécurité (A) en cas d'absence d'alimentation en courant électrique.

8. - Dispositif selon la revendication 7, **caractérisé en ce qu'**il comprend en outre une vanne de sécurité (B) à clapet de sécurité (26) porté par un noyau magnétique mobile (27) sollicité par un ressort de rappel (29) en position d'obturation et sollicité par un champ magnétique d'ouverture de vanne généré par un circuit magnétique de vanne de sécurité et une bobine d'actionnement (32), la vanne de sécurité (B) étant raccordée en série dans le chemin de circulation de fluide, la bobine d'actionnement (32) de vanne de sécurité étant alimentée électriquement en simultanéité de la bobine d'excitation (20) de la vanne de commande à fermeture de sécurité (A).

9. - Dispositif selon l'une quelconque des revendications 1 à 6, **caractérisé en ce qu'**il comprend en outre une vanne de sécurité (B) à clapet de sécurité (26) porté par un noyau magnétique mobile (27) sollicité par un ressort de rappel (29) en position d'obturation et sollicité par un champ magnétique d'ouverture de vanne généré par un circuit magnétique de vanne de sécurité et une bobine d'actionnement (32), la vanne de sécurité (B) étant raccordée en série dans le chemin de circulation de fluide, le circuit magnétique de vanne de sécurité étant conformé pour constituer simultanément le circuit magnétique de couplage (19) de la vanne de commande à fermeture de sécurité (A), et la bobine d'actionnement (32) remplissant simultanément la fonction de bobine d'excitation (20) de la vanne de commande à fermeture de sécurité (A).

10. - Dispositif selon l'une quelconque des revendications 1 à 9, **caractérisé en ce que**, la bobine d'excitation (20) et son courant d'excitation sont choisis juste suffisants pour maintenir le collage des tronçons (12, 13) l'un à l'autre lorsqu'ils sont en position rapprochée.

## Claims

1. Control and safety device for a flow of fluid through a fluid circulation path through a main body (1) of the device, which includes :
- an axial displacement sealing valve (7) cooperating with a seat (8) to determine, in the fluid passage, a fluid passage section (71) adjustable between a fully open position and a shut-off position,
- a linear actuator (10) directly mechanically connected to the sealing valve (7) by an axial displacement connecting rod (9), for continuously and axially moving the sealing valve (7) facing the seat (8) between its fully open and shut-off positions, enabling continuous adjustment of the position of the sealing valve (7) facing the seat (8),
- the connecting rod (9) including a first segment (12) and a second segment (13) which are coaxial and independent, the first segment (12) being fastened to the sealing valve (7), the second segment (13) being driven by the linear actuator (10), and the two segments (12, 13) being able to move axially relative to each other between a relatively close together position and a relatively far apart position,
- a return spring (18) urging the sealing valve (7) and the first segment (12) of the connecting rod (9) away from the second segment (13) of the connecting rod (9) to spring-load the sealing valve (7) into the shut-off position,
**characterized in that** :
- each of the first (12) and second (13) segments of the connecting rod (9) comprises at least one respective ferromagnetic material connecting portion (14, 15), two respective contact surfaces (16, 17) of the two connecting portions (14, 15) facing each other, with an airgap (E) when they are in the relatively far apart position,
- a magnetic coupling circuit (19) with an excitation coil (20) is magnetically coupled to the connecting portions (14, 15) of the segments (12, 13) of the connecting rod (9) and is shaped to generate selectively a magnetic field circulating between the two connecting portions (14, 15) of the segments (12, 13) of the connecting rod, said magnetic field causing mutual magnetic attraction of the segments (12, 13) of the connecting rod (9) toward each other against a return force exerted by the return spring (18), said magnetic attraction being greater than the return force of the return spring (18) when the two segments (12, 13) are in the relatively close together position,
- the magnetic coupling circuit (19) and the excitation coil (20) are components of the main body (1) of the device,
with the result that energization of the excitation coil (20) maintains the sticking together of the segments (12, 13) of the connecting rod (9), ensuring the mechanical coupling of the sealing valve (7) to the linear actuator (10) for its functional movements, and interruption of the supply of power to the excitation coil (20) causes the segments (12, 13) of the connecting rod (9) to be released from each other, ensuring the decoupling of the sealing valve (7), which is then returned to the shut-off position by the return spring (18), regardless of the status of the linear actuator (10).

2. Device according to claim 1, **characterized in that** the magnetic coupling circuit (19) comprises a distal pole (19a) and a proximal pole (19b), with only a small airgap between on the one hand the distal pole (19a) and the proximal pole (19b) and on the other hand the respective connecting portions (14 and 15) of the connecting rod (9).

3. Device according to claim 1 or claim 2, **characterized in that** the connecting portions (14, 15) of the segments (12, 13) of the connecting rod (9) have respective plane contact surfaces (16, 17).

4. Device according to claim 1 or claim 2, **characterized in that** the connecting portions (14, 15) of the segments (12, 13) of the connecting rod (9) have respective corresponding frustoconical contact surfaces (16, 17).

5. Device according to any one of claims 1 to 4, **characterized in that** the linear actuator (10) includes a motor.

6. Device according to any one of claims 1 to 5, **characterized in that** it includes :
- a sensor (22) responsive to the electrical current flowing in the excitation coil (20) and generating an electrical coupling signal in the event of closure of the magnetic coupling circuit (19) by movement toward each other and sticking of the segments (12, 13) of the connecting rod (9) to each other,
- a control circuit (11) of the linear actuator (10), receiving the electrical coupling signal, and adapted to interrupt the energization of the linear actuator (10) in the closure direction on receiving said electrical coupling signal.

7. Device according to any one of claims 1 to 6, **characterized in that** the assembly constitutes a safety shut-off control valve (A) in the event of absence of the electrical power supply.

8. Device according to claim 7, **characterized in that** it further comprises a safety valve (B) with a safety sealing valve (26) carried by a mobile magnetic core (27) spring-loaded by a return spring (29) into a shut-off position and acted on by a valve opening magnetic field generated by a safety valve magnetic circuit and an actuation coil (32), and the safety valve (B) being connected in series in the fluid circulation path, the safety valve actuation coil (32) being electrically energized simultaneously with the excitation coil (20) of the safety shut-off control valve (A).

9. Device according to any one of claims 1 to 6, **characterized in that** it further includes a safety valve (B) with a safety sealing valve (26) carried by a mobile magnetic core (27) spring-loaded by a return spring (29) into a shut-off position and acted on by a valve opening magnetic field generated by a safety valve magnetic circuit and an actuation coil (32), the safety valve (B) being connected in series in the fluid circulation path, the safety valve magnetic circuit being formed to constitute simultaneously the magnetic coupling circuit (19) of the safety shut-off control valve (A), and the actuation coil (32) simultaneously fulfilling the function of excitation coil (20) of the safety shut-off control valve (A).

10. Device according to any one of claims 1 to 9, **characterized in that** the excitation coil (20) and its excitation current are adapted to be just sufficient to maintain the sticking of the segments (12, 13) to each other when they are in the close together position.

## Patentansprüche

1. - Steuer- und Sicherheitsvorrichtung für einen Durchfluß von Fluid, welches einen Zirkulationsweg des Fluides durchläuft, der einen Hauptkörper (1) der Vorrichtung durchquert, mit:
- einem Ventilkörper (7) mit axialer Bewegung, der mit einem Sitz (8) zusammenwirkt, um in der Fluidpassage einen Abschnitt (71) der Passage des Fluides zu definieren, der zwischen einer Position vollständiger Öffnung und einer Absperrposition einstellbar ist,
- einem Linear-Betätigungsorgan (10), das mechanisch mit dem Ventilkörper (7) direkt mittels einer axial verschieblichen Verbindungsstange (9) verbunden ist, um den Ventilkörper (7) axial in kontinuierlicher Weise gegenüber dem Sitz (8) zwischen seinen Stellungen der vollständigen Öffnung und der Absperrung zu verschieben, was eine kontinuierliche Einstellung der Position des Ventilkörpers (7) gegenüber dem Sitz (8) gestattet,
- wobei die Verbindungsstange (9) einen ersten Abschnitt (12) und einen zweiten Abschnitt (13) enthält, die koaxial und unabhängig voneinander sind, wobei der erste Abschnitt (12) mit dem Ventilkörper (7) verbunden ist, der zweite Abschnitt (13) durch das Linear-Betätigungsorgan (10) angetrieben ist und die beiden Abschnitte (12, 13) sich axial gegeneinander zwischen einer Position relativer Annäherung und einer Position relativer Entfernung bewegen können,
- einer Rückstellfeder (18), die den Ventilkörper (7) und den ersten Abschnitt (12) der Verbindungsstange (9) von dem zweiten Abschnitt (13) der Verbindungsstange (9) fortdrückt, um den Ventilkörper (7) in Absperrstellung zu bringen
**dadurch gekennzeichnet, daß**:
jeder der ersten (12) und zweiten (13) Abschnitte der Verbindungsstange (9) mindestens einen Verbindungsteil (14, 15) jeweils aus ferromagnetischem Material aufweist, wobei die beiden Verbindungsteile (14, 15) in Bezug zueinander an zwei entsprechenden Kontaktflächen (16, 17) stehen, mit einem Luftspalt (E), wenn sie in der Position relativer Entfernung sind,
- ein magnetischer Kopplungskreis (19) mit Erregerspule (20) magnetisch mit den Verbindungsteilen (14, 15) der Abschnitte (12, 13) der Verbindungsstange (9) gekoppelt ist und so ausgebildet ist, daß er selektiv ein Magnetfeld erzeugt, das zwischen den beiden Verbindungsteilen (14, 15) der Abschnitte (12, 13) der Verbindungsstange fließt, wobei das genannte magnetische Feld eine wechselseitige magnetische Anziehung der Abschnitte (12, 13) der Verbindungsstange (9) zueinander bewirkt entgegen der Rückstellkraft, die von der Rückstellfeder (18) ausgeübt wird, wobei die genannte magnetische Anziehung größer ist als die Rückstellkraft der Rückstellfeder (18), wenn die beiden Abschnitte (12, 13) in der Position der relativen Annäherung sind,
- der magnetische Kopplungskreis (19) und die Erregerspule (20) eigene Elemente des Hauptkörpers (1) der Vorrichtung sind,
- derart, daß die Erregung der Erregerspule (20) ein Haften der Abschnitte (12, 13) der Verbindungsstange (9) aneinander aufrecht erhält, was die mechanische Kopplung des Ventilkörpers (7) mit dem Linear-Betätigungsorgan (10) für dessen funktionelle Verschiebungen sicherstellt und eine Unterbrechung der Erregung der Erregerspule (20) ein relatives Lösen der Abschnitte (12, 13) der Verbindungsstange (9) voneinander bewirkt, was eine Endkopplung des Ventilkörpers (7) sicherstellt, der dann in die Absperrposition mittels der Rückholfeder (18) zurückgestellt ist, unabhängig vom Zustand des Linear-Betätigungsorgans (10).

2. - Vorrichtung nach Anspruch 1, **dadurch gekennzeichnet, daß** der magnetische Kopplungskreis (19) einen distalen Pol (19a) und einen proximalen Pol (19b) enthält, mit lediglich einem kleinen Luftspalt zwischen dem distalen Pol (19a) und dem proximalen Pol (19b) einerseits und den entsprechenden Verbindungsteilen (14 und 15) der Verbindungsstange (9) andererseits.

3. - Vorrichtung nach einem der Ansprüche 1 oder 2, **dadurch gekennzeichnet, daß** die Verbindungsteile (14, 15) der Abschnitte (12, 13) der Verbindungsstange (9) entsprechende ebene Kontaktflächen (16, 17) haben.

4. - Vorrichtung nach einem der Ansprüche 1 oder 2, **dadurch gekennzeichnet, daß** die Verbindungsteile (14, 15) der Abschnitte (12, 13) der Verbindungsstange (9) entsprechende kegelstumpfförmig korrespondierende Kontaktflächen (16, 17) haben.

5. - Vorrichtung nach irgendeinem der Ansprüche 1 bis 4, **dadurch gekennzeichnet, daß** das Linear-Betätigungsorgan (10) einen Motor enthält.

6. Vorrichtung nach irgendeinem der Ansprüche 1 bis 5, **dadurch gekennzeichnet, daß** sie enthält:
- einen Sensor (22), der auf einen elektrischen Strom anspricht, der die Erregerspule (20) durchläuft und ein elektrisches Kopplungssignal erzeugt, beim Schließen des magnetischen Kopplungskreises (19) aufgrund Annäherung und Klebens der Abschnitte (12, 13) der Verbindungsstange (9) aneinander,
- einen Steuerkreis (11) des Linear-Betätigungsorgans (10), der das elektrische Kopplungssignal empfängt und so ausgebildet ist, daß er die Energieversorgung des Linear-Betätigungsorgans (10) in Richtung dessen Schließens beim Empfang des genannten elektrischen Kopplungssignals unterbricht.

7. - Vorrichtung nach irgendeinem der Ansprüche 1 bis 6, **dadurch gekennzeichnet, daß** sie ein Sicherheitsabschaltsteuerventil (A) bei Abwesenheit der elektrischen Stromversorgung bildet.

8. - Vorrichtung nach Anspruch 7, **dadurch gekennzeichnet, daß** sie zusätzlich ein Sicherheitsventil (B) mit Sicherheitsabsperrventil (26) enthält, das von einem beweglichen magnetischen Kern (27) getragen ist, der durch eine Rückstellfeder (29) in Absperrstellung gedrückt ist und durch ein Öffnungsmagnetfeld für das Ventil beaufschlagt ist, das von einem Magnetkreis des Sicherheitsventiles und eine Betätigungsspule (32) erzeugt wird, wobei das Sicherheitsventil (B) in Reihe in dem Fluidzirkulationsweg angeordnet ist, wobei die Betätigungsspule (32) des Sicherheitsventils simultan mit der Erregerspule (20) des Sicherheitsabschaltsteuerventiles (A) elektrisch mit Energie versorgt wird.

9. - Vorrichtung nach irgendeinem der Ansprüche 1 bis 6, **dadurch gekennzeichnet, daß** sie zusätzlich ein Sicherheitsventil (B) mit einem Sicherheitsabsperrventil (26) enthält, das von einem beweglichen magnetischen Kern (27) getragen ist, der durch eine Rückstellfeder (29) in Absperrposition vorgespannt ist und durch ein Öffnungsmagnetfeld für das Ventil beaufschlagt ist, das durch einen magnetischen Kreis des Sicherheitsventiles und durch eine Betätigungsspule (32) erzeugt wird, wobei das Sicherheitsventil (B) in Reihe in dem Zirkulationspfad des Fluides angeordnet ist, wobei der magnetische Kreis des Sicherheitsventiles so ausgebildet ist, daß er gleichzeitig den magnetischen Kopplungskreis (19) des Sicherheitsabstandsteuerventiles (A) bildet und die Betätigungsspule (32) gleichzeitig die Funktion der Erregerspule (20) des Sicherheitsabsperrsteuerventiles (A) erfüllt.

10. - Vorrichtung nach irgendeinem der Ansprüche 1 bis 9, **dadurch gekennzeichnet, daß** die Erregerspule (20) und ihr Erregerstrom so gewählt sind, daß sie zum Aufrechterhalten des wechselseitigen Klebens der Abschnitte (12, 13) in ihrer angenäherten Position ausreichen.
